# EUROPÄISCHE PATENTSCHRIFT

(11) **EP 1 413 556 B1**
(45) Veröffentlichungstag und Bekanntmachung des Hinweises auf die Patenterteilung: **27.09.2006**
(21) Anmeldenummer: 03023456.1
(22) Anmeldetag: 18.10.2003
(51) Int. Cl.: C02F 1/72

(54) **Verfahren und Anlage zur Vorbehandlung von Abwässern durch Chemikalieneinsatz**
Process and device for the chemical pretreatment of wastewater
Procédé et dispositif pour le prétraitement chimique des eaux usées

(30) Priorität: 21.10.2002 DE 10249088; 24.05.2003 DE 10323518
(43) Veröffentlichungstag der Anmeldung: 28.04.2004
(73) Patentinhaber: Lockan, Frank, 15913 Byhleguhre (DE); Lohr, Ernst, 03222 Lübbenau (DE)
(72) Erfinder: Lockan, Frank, 15913 Byhleguhre (DE); Lohr, Ernst, 03222 Lübbenau (DE); Lohr, Thomas, 03222 Lübbenau/Zerkwitz (DE)
(74) Vertreter: Haschick, Gerald

(56) Entgegenhaltungen:
- EP-A- 0 336 229
- EP-A- 0 576 124
- DE-A- 2 152 661
- FR-A- 2 812 628
- US-A- 5 356 458
- US-A- 5 833 864
- CADENA F ET AL: "EVALUATION OF CHEMICAL OXIDIZERS FOR HYDROGEN SULFIDE CONTROL" JOURNAL OF THE WATER POLLUTION CONTROL FEDERATION, WATER POLLUTION CONTROL FEDERATION. WASHINGTON, US, Bd. 60, Juli 1988 (1988-07), Seiten 1259-1263, XP002915988

## Beschreibung

Die Erfindung betrifft eine Verfahrenstechnologie, welche dazu dient, die Vorbehandlung von Abwässern durch die Entwicklung eines neuen chemischen Stoffgemisches und die Dosierung in granulierter Form und Schachteinbauweise der Anlage als Standardvariation oder mit intelligenter Regelung zur Erfassung von Fremdeinflüssen durchzuführen. Hauptzweck des Verfahrens und der Anlage ist die Beseitigung von Geruchsemissionen und Verhinderung von Korrosion in abwassertechnischen Anlagen.

Der Stand der Technik stellt sich wie folgt dar. Bekannt ist ein Akdolit-Wasseraufbereitungsverfahren, welches dadurch gekennzeichnet ist, dass ein dolomitisches Filtermaterial mit kugeliger Kornform eingebracht wird. Es wird für die filtrative Entsäuerung von Wasser bis zur Einstellung von Calsitsättigung gemäß Trinkwasserverordnung eingesetzt. Dabei erfolgt eine korrosionschemisch und physiologisch günstige Erhöhung der Konzentration an Calcium-, Magnesium- und Hydrogenkarbonationen. Wegen der kugeligen Kornform und der hohen Abriebfestigkeit eignet sich Akdolit insbesondere für Anlagen, die mit Vorratssilos ausgerüstet sind und bei denen die Anlieferung mit Silofahrzeugen erfolgt. Dieses Akdolit ist in folgender Zusammensetzung gegeben: Calciumkarbonat 68,9 %, Calciumoxid 1,4 %, Magnesiumoxid 25,4 %. Schlussfolgernd aus dem Einsatz des Akdolit-Verfahrens sind die hohe Dosiermengenvorrichtung und Anordnung außerhalb eines Schachtes als Nachteil zu betrachten. Des Weiteren wird eine optimale Unterbindung der Geruchsemission in abwassertechnischen Anlagen nicht erreicht. Es ist bekannt, dass bestimmte chemische, wässrige Lösungen zur Geruchsemission in Entwässerungssystemen ausgeführt werden. Dabei werden bestimmte Verfahren, wie die Drucklufteinperlung, biofilterchemische Verfahren zur Geruchskompensation und Verdünnung mit dem reinen Wasser ausgeführt. Sämtliche Anwendungsgebiete weisen aber dahingehend den Nachteil auf, dass eine so gut wie vollständige Geruchsemission schwer erreicht wird und die Anlagentechnik einen erheblichen Platzbedarf außerhalb des Schachtes benötigt.

Des Weiteren ist bekannt ein Patent US 5,833,864 "Verfahren zur Reduktion und Kontrolle der Freilassung von Gas und Gerüchen von Abwasser". Dabei wird eine Kontrolle der freizulassenden ätzenden Gase und Gerüche durchgeführt, wobei insbesondere dem Abwasser Magnesium, Kohlenoxid und/oder Magnesiumoxid beigefügt wird. Dabei werden diese beiden Stoffe dem normalen Kanalsystem über entsprechende Öffnungen zugeführt.

Ziel der Erfindung ist es, ein Verfahren und eine Anlage zur Vorbehandlung von Abwasser durch Chemikalieneinsatz in Schachteinbauweise als Standardvariation oder mit intelligenter Regelung zur Erfassung zur Fremdeinflüssen zu finden, welche die Nachteile des Standes der Technik beheben und ohne großen technischen Aufwand ausführbar sind.

Aufgabe der Erfindung ist es, ein Verfahren und eine Anlage zur Vorbehandlung von Abwasser durch Chemikalieneinsatz in Schachteinbauweise als Standardvariation oder mit intelligenter Regelung zur Erfassung zur Fremdeinflüssen zu finden, wobei eine Minimierung von Geruchsemissionen in den abwassertechnischen Anlagen über Zugabe von chemischen Substanzen erreicht wird und anlagentechnisch ein Sonderaufbau neben dem Abwasserschacht nicht notwendig ist.

Die Aufgabe wird erfindungsgemäß dadurch gelöst, dass ein Verfahren zur Vorbehandlung von Abwasser durch Chemikalieneinsatz stattfindet, in dem eine pH-Wert-Stabilisierung, Beeinflussung des Redoxpotentials durch Oxidation leicht oxidierbarer Abwasserinhaltsstoffe durchgeführt wird. Des Weiteren ist es notwendig, eine vorhergehende genaue Analyse der Abwasserqualität stattfinden zu lassen. Nach Finden der jeweiligen Abwasserqualität auf Grundlage der vorhergehenden Analyse wird nun ein Stoffgemisch aus Calciumkarbonat, Magnesiumoxid, einen Restanteil nichttoxischer Spurenelemente sowie Kaliumpermanganat in Form eines Feststoffes als Granulat hergestellt.

Vorzugsweise ist das Granulat in splittiger Form gegeben. Dieses Stoffgemisch wird nach Auswertung der Analyseergebnisse der Abwasserwerte in einer bestimmten Dosierung in das Abwasser über den Abwasserschacht eingegeben. Die Zusammensetzung eines Stoffgemisches hat sich vorzugsweise in folgender prozentualer Zusammensetzung ergeben: 71,2 % Calciumkarbonat, 25,6 % Magnesiumoxid, 0,5 Calciumoxid, 33,5 % Kaliumpermanganat und ein Restanteil nichttoxischer Spurenelemente. Dieses Stoffgemisch wird über einen Vorratsbehälter und der nach unten hin ausgerichteten Dosierrichtungseinstellung im gegebenen Kreislauf, welcher über ein Pumpensystem in dem Abwasserschacht stattfindet, eingebracht. Wird bei einer Neueinrichtung dieses Verfahrens eine Abwasserqualität auf Grundlage der Anwendung des Stoffgemisches durchgeführt, muss eine Hochdosierung dieses Stoffgemisches von ca. 60 g/m³ Abwasser ausgeführt werden, um somit bestehende Verunreinigungen und erhöhte Geruchsbelästigungen zu beseitigen. Nach ca. 3 bis 4 Wochen ist es nun möglich, auf einer Abwasserstrecke von ca. 5 km diese Dosierung in eine Normalmenge zu reduzieren, welche sich auf 30 bis 40 g/m³ Abwasser bewegt.

Die Vorrichtung wird aufgabengemäß dadurch realisiert, dass eine Anlage zur Vorbehandlung von Abwasser durch Chemikalieneinsatz zur Verbesserung der pH-Wert-Stabilisierung, Beeinflussung des Redoxpotentials durch Oxidation leicht oxidierbarer Abwasserinhaltsstoffe in einer Abwasseranlage, welche in Form einer Schachteinbauweise gegeben ist, so ausgeführt, dass in einem Abwasserschacht, welcher mit einem Pumpensystem versehen ist, innerhalb dieses Abwasserschachtes ein Vorratsbehälter mit einer unterhalb angebrachten Dosierrichtungseinstellung gegeben ist. Des Weiteren ist diese Dosierrichtungseinstellung mit einem Motor verbunden, welcher es ermöglicht, über eine spezielle Motorkupplung mit einem Frequenzumrichter, einer SPS sowie einem Wandler, welcher ein Signal von einer Redoxelektrode erhält, eine intelligente Steuerung der Dosierrichtungseinstellung auszuführen. Die jeweilige elektrische Versorgung wird aus der Anlage des Betreibers realisiert. Die Kupplung der Redoxelektrode mit dem Wandler, der SPS und dem Frequenzumrichter in Verbindung mit dem Motor stellt eine intelligente Regelvariante dar, um somit eine Vorortmessung des Abwassers und eine entsprechende Dosiermengenzuführung über den Motor und der Dosierrichtungseinstellung zu realisieren.

Das erfindungsgemäße Verfahren mit seiner Vorrichtung birgt folgende Vorteile. Grundsätzlich wird damit erreicht, dass eine Abtötung und Vermeidung der für die Bildung des H₂S verantwortliche anaerobe, sulfatreduzierende Biologie stattfindet. Des Weiteren wird eine pH-Wert-Stabilisierung ausgeführt. Das Verfahren bedingt weiterhin eine Beeinflussung des Redoxpotentials durch Oxidation leicht oxidierbarer Abwasserinhaltsstoffe. Grundsätzlich kann dem Verfahren und der Vorrichtung zugesprochen werden, dass der Hauptzweck des Verfahrens darin besteht, dass eine vollständige Beseitigung von Geruchsemissionen aus der abwassertechnischen Anlage stattfindet.

Das Verfahren und die Anlage werden an einem Ausführungsbeispiel näher erläutert. Dazu ist eine Zeichnung ausgeführt.

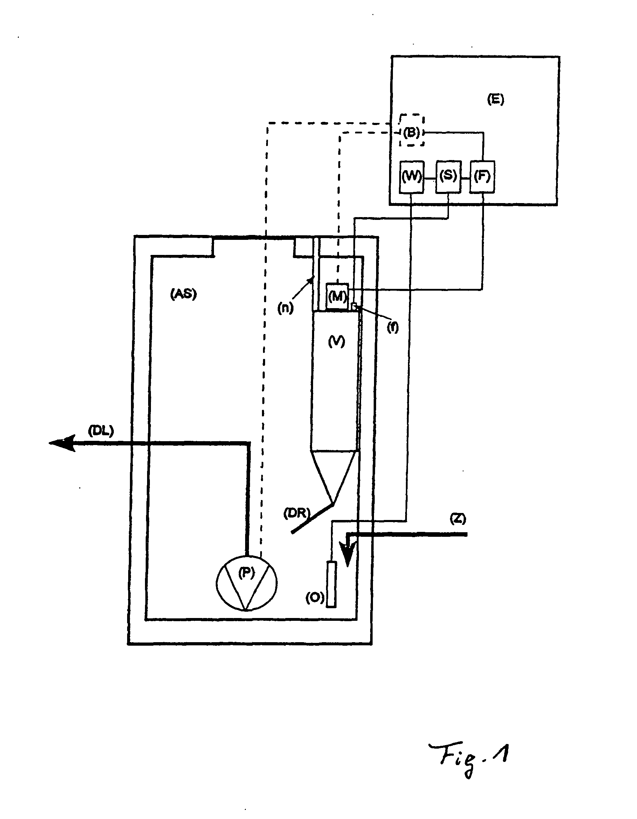

Figur 1: Wasserschacht mit Vorratsbehälter.

Figur 1 zeigt eine Anordnung des Vorratsbehälters V in einem Abwasserschacht AS, welcher einen Zulauf Z, eine Pumpe P und eine Druckleitung zur Weiterführung des Abwassers DL aufweist. Der Grundsatz der Verwendung dieses Verfahrens bzw. der Anlage liegt darin begründet, dass durch den Schwefelwasserstoff eine Geruchsbelästigung für die Umwelt entsteht. Dieser Schwefelwasserstoff hat die Eigenschaft, je kleiner die Konzentration ist, umso größer ist die Geruchsempfindung. Je höher die Konzentration dieses Schwefelwasserstoff gegeben ist, umso geringer wird die Geruchsempfindung. Ist dieser Sachverhalt gegeben, kann die Konzentration des Schwefelwasserstoffes tödlich wirken. Eine weitere Eigenschaft hat den Bestandteil, dass durch die hohe Luftfeuchtigkeit im Pumpenschacht eine Verbindung zu Schwefelsäure entsteht. Diese Schwefelsäure bewirkt, dass eine so genannte Betonkorrosion erfolgt. Diese wesentlichen Nachteile in einer Abwasseranlage will man nun mit dem erfindungsgemäßen Verfahren und der entsprechenden Anlage dazu negieren. Als notwendiger Verfahrensschritt ist zu benennen, dass eine genaue Voruntersuchung des Abwassers ausgeführt werden muss. Diese Voruntersuchung ist erforderlich, um die genaue Dosierung des Zusatzstoffes als Stoffgemisch über die Anlage vorzugeben.

Hierzu sind zwei verschiedene Ausführungsvarianten der jeweiligen Anlage realisierbar. Dabei handelt es sich um eine Standardvariante, welche keine intelligente Regelung ausführt, sowie eine Variante mit intelligenter Regelung. Beide Varianten werden nachfolgend erläutert. Bei dem besonderen Ausführungsbeispiel geht man nun von bestimmten Ergebnissen und der Optimierung des Verfahrens zur Beseitigung bzw. Minderung von Geruchsemissionen in Abwasseranlagen nach einem großtechnischen Versuch aus. Dabei sind folgende Parameter gegeben. Die Belastung des Abwassers vor Versuchsbeginn betrug ca. 250 bis 300 ppm. Die jeweilige Leistung der Pumpenstation im Abwasserkanal entsprach einer Summe von 120 m³/h. Grundlage der Bemessung der Dosierung ist die jeweilige Leistung aus zwei Pumpen, welche 120 m³/h Fördermenge darstellte. Als erfindungsgemäßes Stoffgemisch wurde eine Komponente 1, welche sich aus ca. 66,5 % zusammensetzt, verwendet. Dabei ist diese Komponente 1 aus 71,2 % Calciumkarbonat, 25,6 % Magnesiumoxid, 0,5 Calciumoxid und ein Restanteil nichttoxischer Spurenelemente ausgeführt. Es wurde dabei das handelsübliche Magnodol eingesetzt. Eine zweite Komponente, welche dem Stoffgemisch zugeführt wurde, hat eine Zusammensetzung aus 33,5 % Kaliumpermanganat. Dieses neue, erfindungsgemäße Stoffgemisch aus den Komponenten 1 und 2 hat den wesentlichen Vorteil, dass eine pH-Wert-Stabilisierung des Abwassers verursacht und eine Oxidation leicht oxidierbarer Stoffe realisiert wird. Bei einer Neueinstellung eines Abwassersystems ist eine entsprechende Hochdosierung mit ca. 60 g/m³ Abwasser erforderlich, um die bestehenden Substanzen im Abwassersystem abzubauen. Nach Einarbeitung des Systems kann die Dosiermenge zur Stabilisierung des Systems auf 30 bis 20 g/m³ reduziert werden. Bei der Hochdosierung in der Einarbeitungszeit bei einer Länge der Abwasserleitung von ca. 5 km wurde nach 3 bis 4 Wochen die Normaldosierung von 30 bis 20 g/m³ erreicht. Schlussfolgernd aus den Erkenntnissen der Versuchsdurchführung ist es wesentlich zu benennen, dass die Zusammensetzung der Komponente 1 einerseits als Trägermaterial für das Kaliumpermanganat dient und andererseits eine Reaktion mit freien Säuren stattfinden lässt. Die Voraussetzung des Materials, eine grob strukturierte Oberfläche, bietet dem Hauptreagenten Kaliumpermanganat optimale Haftungsbedingungen. Die grobe Oberfläche des Trägermaterials ist erforderlich, um eine Trennung beider Komponenten und somit mechanischen Störungen der Anlage entgegenzuwirken. Die Reaktion der Komponente 1 mit im Abwasser eventuell befindlichen freien Säuren führt zu einer CO₂-Freisetzung, die wiederum auf Grund der sich im Überschuss befindlichen Komponente 1 sofort chemisch gebunden wird. Diese in geringem Maße pH-Wert-stabilisierende Wirkung stellt einen günstigen Umstand zur Stabilisierung der Pufferkapazität (m-Wert) dar. Die Pufferkapazität ist für den Klärprozess (insbesondere für die Nitrifikation) von entscheidender Bedeutung. Der m-Wert darf 2 mmol/l nicht unterschreiten, da sonst die Denitrifikation gefährdet wird. Um eine optimale Dosierung vornehmen zu können, ist eine Erstellung einer Anlagenkennlinie in Abhängigkeit der Drehzahl des Motors und der daraus resultierenden Dosiermenge erforderlich. Auf Grund der Tatsache, dass der Hauptreagent Kaliumpermanganat ein starkes Oxidationsmittel ist, wird es um so bedeutender, die optimale Dosiermenge nach Einarbeit des System zu ermitteln. Nur mittels optimaler Dosierung ist die Vorteilhaftigkeit des Einsatzes der Chemikalie sowohl für die Geruchsminimierung und Korrosionsvermeidung im Kanalnetz als auch für den positiven Einfluss auf den Klärprozess (Stabilisierung der Pufferkapazität und Entgegenwirken der Blähschlammbildung) gewährleistet. Das entsprechende Stoffgemisch aus den Komponenten 1 und 2 bezeichnet man als Red-O-pH 2.

Nachfolgend wird gemäß Figur 1 eine Standardvariante der Anlage beschrieben. Die Standardvariante besteht aus folgenden Anlagenteilen: Vorratsbehälter für die Chemikalien, Motor mit gekoppelter Dosiervorrichtung in der Behälterspitze M, dem Dosierrichtungseinsteller DR, und dem Nachfüllstutzen n. Das Fassungsvermögen der Station richtet sich nach der Größe des Abwasserschachtes AS und kann variieren. Diese gilt auch bei den nachfolgend beschriebenen Anlagen mit intelligenter Regelung. Die Funktionsweise der Anlage lässt sich wie folgt darstellen. Der Elektroanschluss der Station erfolgt an die Anlage des Betreibers E und B. Die Dosieranlage schaltet parallel zur Abwasserpumpe P. Durch die Dosierrichtungseinstellung DR wird eine optimale Dosierstellung erreicht, die eine optimale Mischung des Stoffgemisches aus den Chemikalien mit dem Abwasser durch die Pumpe P in der Druckleitung DL garantiert. Die Einstellung der Dosiermenge und des Mischungsverhältnisses der Chemikalien richtet sich nach der Pumpenleistung der Abwasserpumpe P und der Beschaffenheit des Abwassers.

Eine zweite Variante stellt sich mit intelligenter Regelung dar. Diese ist aus folgenden Anlagenteilen gegeben: Vorratsbehälter für die Chemikalien V, Motor mit gekoppelter Dosiervorrichtung in der Behälterspitze M, Dosierrichtungseinsteller DR, Nachfüllstutzen n, Füllstandsmessung f, Wandler W, SPS S, Frequenzumrichter F, Redoxelektrode O. Die Funktionsweise der Anlage ist in der Figur 1 ersichtlich und nachfolgend beschrieben. Der Elektroanschluss der Station erfolgt an die Anlage des Betreibers E und B. Die Dosieranlage schaltet parallel zur Abwasserpumpe P. Durch die Dosierrichtungseinstellung DR wird eine optimale Dosierstellung erreicht, die eine optimale Mischung der Chemikalien mit dem Abwasser durch die Pumpe P in der Druckleitung DL garantiert. Die Einstellung der Dosiermenge erfolgt über die Onlinemessung der Abwasserbeschaffenheit über die Redoxelektrode O aus dem Zulauf Z, den Wandler W, der SPS S und dem Frequenzumrichter F. Die erfassten Daten aus der Redoxelektrode O werden dem Wandler W zugeführt, in der SPS S verarbeitet und die Drehzahl des Motors M durch den Frequenzumrichter F angepasst und damit die erforderliche Dosiermenge vorgegeben.

Eine andere Version stellt sich folgendermaßen dar, dass die Variante 1 und die Variante 2 der Anlagenkonfiguration dahingehend erweitert werden, dass Dosiertaschen in der Abwasseranlage eingebracht werden. Diese Dosiertaschen werden in kleineren, vorgelagerten Abwasseranlagen oder direkt in der Pumpstation installiert. Die Taschen bestehen aus wasserdurchlässigen Materialien und sind mit einem Chemikaliengemisch zur pH-Wert-Stabilisierung und Geruchsadsorption gefüllt. Der Einbau erfolgt so, dass das Gemisch ständig umspült wird.

### Bezugszeichen

- V: Vorratsbehälter
- M: Motor mit gekoppelter Dosiervorrichtung
- DR: Dosierrichtungseinsteller
- n: Nachfüllstutzen
- DL: Druckleitung
- AS: Abwasserschacht
- E: Anlage des Betreibers
- B: Anlage des Betreibers
- P: Pumpe
- Z: Zulauf
- f: Füllstandsmessung
- W: Wandler
- S: SPS
- F: Frequenzumrichter
- O: Redoxelektrode

## Patentansprüche

1. Verfahren zur Vorbehandlung von Abwässern durch Chemikalieneinsatz in Abwasserschächten bekannter Bauart, wobei eine vorhergehende genaue Analyse des Abwassers durchgeführt wird, **dadurch gekennzeichnet, dass** in der Dosierstation ein Stoffgemisch mit den reaktiven Hauptbestandteilen Kaliumpermanganat, Oxidgruppen und Karbonatgruppen in Form eines Feststoffes als Granulat hergestellt wird und das Stoffgemisch nach Auswertung der Abwasserwerte in einer bestimmten Dosierung in das Abwasser des Abwasserschachtes eingebracht wird.

2. Verfahren nach Anspruch 1 **dadurch gekennzeichnet, dass** das Stoffgemisch im Wesentlichen aus Calciumkarbonat, Magnesiumoxid sowie Kaliumpermanganat besteht und das Stoffgemisch als Feststoffbestandteil in Form von Granulat miteinander vermischt wird, wobei das Granulat vorzugsweise in splittiger Form hergestellt wird.

3. Verfahren nach den Ansprüchen 1 und 2 **dadurch gekennzeichnet, dass** vorzugsweise je nach Wasseranalyse ca. 71,2 % Calciumkarbonat, ca. 25,6 % Magnesiumoxid, 0,5 Calciumoxid und 33,5 % Kaliumpermanganat und ein Restbestandteil von nichttoxischen Spurenelementen vermischt werden.

4. Verfahren nach Anspruch 1 **dadurch gekennzeichnet, dass** eine höhere Dosierung von ca. 60 g/m³ Abwasser bei der Neueinrichtung des Verfahrens und seiner Anlage in einem Abwassersystem durchgeführt wird.

5. Verfahren nach den Ansprüchen 1 und 4 **dadurch gekennzeichnet, dass** nach einem bestimmten Zeitraum von ca. 3 bis 4 Wochen die Dosierung des Gemisches auf 30 bis 20 g/m³ Abwasser reduziert werden kann.

6. Anlage zur Vorbehandlung von Abwässern durch Chemikalieneinsatz zur Verbesserung der pH-Wert-Stabilisierung, Beeinflussung des Redoxpotentials durch Oxidation leicht oxidierbarer Abwasserinhaltsstoffe in einer Abwasseranlage, welche in Form einer Schachteinbauweise gegeben ist, wobei ein Zulauf- bzw. Ablauf über ein Pumpensystem innerhalb des Schachteinbaues zum Weitertransport des Abwassers vorhanden sind und innerhalb des Wasserschachtes ein Vorratsbehälter (V) für die Chemikalien und unterhalb des Vorratsbehälters (V) ein Dosierrichtungseinsteller (DR) verfügbar sind, **dadurch gekennzeichnet, dass** sich eine Redoxelektrode (O), welche innerhalb des Abwasserschachtes (AS) unmittelbar am Zulauf (Z) des Abwasserschachtes (AS) gegeben ist, an dem Wandler (W) befindet.

7. Anlage nach Anspruch 6 **dadurch gekennzeichnet, dass** ein Motor mit gekoppelter Dosiervorrichtung (M) gegeben ist und ein Vorratsbehälter (V) oberhalb einen Nachfüllstutzen (n) sowie eine Füllstandsmessung (f) für das beinhaltete Stoffgemisch aufweist.

8. Anlage nach Anspruch 6 **dadurch gekennzeichnet, dass** an dem Motor (M) gekoppelt ein Frequenzumrichter (F), ein SPS (S) und ein Wandler (W) angeschlossen sind.

9. Anlage nach den Ansprüchen 6, 7 und 8 **dadurch gekennzeichnet, dass** die elektrische Versorgung der Anlage von Seiten der Anlage des Betreibers des Abwassersystems (B und E) erfolgt.

## Claims

1. A procedure for the pre-treatment of sewage by using chemicals in sewer manholes of well-known design, whereby a previous, exact analysis of the sewage is carried out, **characterised in that** a mixture of substances with potassium permanganate, oxide and carbonate groups as the main reactive constituents is manufactured in the form of solid matter as granulated material in the dosing station and the mixture of substances of a certain dosage is discharged into the sewage in the sewer manholes after the sewage values have been evaluated.

2. Procedure according to Claim 1 **characterised in that** the mixture of chemicals mainly consists of calcium carbonate, magnesium oxide and potassium permanganate and the mixture of substances is mixed as solid matter constituent in the form of granulated material, whereby the granulated material is manufactured preferably in a splintered form.

3. Procedure according to Claims 1 and 2 **characterised in that** approx. 71.2% calcium carbonate, approx. 25.6% magnesium oxide, 0.5% calcium oxide, 33.5% potassium permanganate and a residual constituent of non-toxic trace elements are preferably mixed according to the water analysis.

4. Procedure according to Claim 1 **characterised in that** a higher dosage of approx. 60g/m³ of sewage is applied in a new arrangement of the procedure and its plant in a sewage system.

5. Procedure according to Claims 1 and 4 **characterised in that** the dosage of the mixture can be reduced from 30 to 20 g/m³ of sewage after a certain period of time of about 3 to 4 weeks.

6. A plant for the pre-treatment of sewage by using chemicals for improving the stabilisation of the pH value, influencing the oxidation-reduction potential through the oxidation of easily oxidisable sewage ingredients in a sewage plant given in the form of a manhole installation where an inlet and outlet respectively are used for further transport of the sewage through a pump system within the manhole installation, a storage tank (V) for the chemicals within the draining shaft and (V) a batching direction adjusting device (DR) under the storage tank are available **characterised in that** an oxidation-reduction electrode (O) given within the sewer manhole (AS) directly at the inlet (Z) of the sewer manhole (AS) is located at the converter (W).

7. Plant according to Claim 6 **characterised in that** a motor with a coupled batching device (M) is given and a storage tank (V) has a refill cap (n) above as well as a level measuring device (f) for the contained mixture of substances.

8. Plant according to Claim 6 **characterised in that** a linked frequency converter (F), an SPS (S) and a converter (W) are connected to the motor (M).

9. Plant according to Claims 6, 7 and 8 **characterised in that** the plant's electrical supply is provided by the controls of the operator of the sewage system (B and E).

## Revendications

1. Procédé de prétraitement des eaux usées utilisant des substances chimiques dans des regards d'égout de type courant, ladite utilisation s'accompagnant d'une analyse précise des eaux usées, **caractérisé en ce que**, dans la station de dosage, un mélange est fabriqué avec les principaux composants réactifs de permanganate de potassium, de groupes oxydes et de groupes de carbonate, donnant une matière solide en forme de granulé et **en ce que** le mélange est introduit dans les eaux usées du regard après évaluation des valeurs des eaux usées.

2. Procédé selon la revendication 1 **caractérisé en ce que** le mélange est composé essentiellement de carbonate de calcium, d'oxyde de magnésium et de permanganate de potassium et que ledit mélange est mélangé en tant que composant solide en forme de granulé, le granulé étant fabriqué de préférence sous forme concassée.

3. Procédé selon les revendications 1 et 2 **caractérisé en ce que** de préférence, selon les résultats d'analyse de l'eau, env. 71,2 % de carbonate de calcium, env. 25,6 % d'oxyde de magnésium, 0,5 d'oxyde de calcium et 33,5 % de permanganate de potassium et un résidu d'éléments traces non toxiques sont mélangés.

4. Procédé selon la revendication 1 **caractérisé en ce qu'**un dosage plus élevé d'env. 60 g/m³ d'eaux usées est effectué lors de la mise en place du procédé et de son installation dans un système d'égout.

5. Procédé selon les revendications 1 et 4 **caractérisé en ce que** le dosage du mélange peut être réduit de 30 à 20 g/m³ d'eaux usées après une période d'env. 3 à 4 semaines.

6. Installation de prétraitement des eaux usées utilisant des substances chimiques en vue d'améliorer la stabilisation de la valeur du ph, l'influence du potentiel redox par oxydation de substances oxydables contenues dans les eaux usées d'une installation de traitement des eaux, qui prend la forme d'un regard dans lequel se trouvent une arrivée ou un écoulement via un système de pompe pour le transfert des eaux usées et dans lequel un réservoir (V) pour les substances chimiques ainsi que, sous le réservoir (V), un dispositif de réglage du dosage (DR) sont disponibles, ladite installation étant **caractérisée en ce qu'**une électrode redox (O), située à l'intérieur du regard d'égout (AS) directement à l'arrivée (Z) du regard (AS), se trouve sur le convertisseur (W).

7. Installation selon la revendication 6 **caractérisée en ce qu'**elle présente un moteur muni d'un dispositif de dosage couplé (M) et un réservoir (V) au-dessus d'une tubulure de remplissage (n) ainsi qu'une jauge (f) pour le mélange contenu.

8. Installation selon la revendication 6 **caractérisée en ce qu'**un variateur de fréquence (F), un SPS (S) et un convertisseur (W) sont connectés au moteur (M)couplé.

9. Installation selon les revendications 6,7 et 8 **caractérisée en ce que** l'alimentation électrique de l'installation est effectuée du côté de l'installation de l'exploitant du système d'égout (B et E).
